(19) Europäisches Patentamt
European Patent Office
Office européen des brevets

(11) Veröffentlichungsnummer : **0 432 492 B1**

# (12) EUROPÄISCHE PATENTSCHRIFT

(45) Veröffentlichungstag der Patentschrift :
**08.09.93 Patentblatt 93/36**

(51) Int. Cl.⁵ : **A62D 5/00,** A62B 17/00, B32B 27/12

(21) Anmeldenummer : **90121771.1**

(22) Anmeldetag : **14.11.90**

(54) **Schutzbekleidungsstück, insbesondere hitzebeständiger Chemikalienschutzanzug.**

(30) Priorität : **15.11.89 DE 8913473 U**

(43) Veröffentlichungstag der Anmeldung :
**19.06.91 Patentblatt 91/25**

(45) Bekanntmachung des Hinweises auf die Patenterteilung :
**08.09.93 Patentblatt 93/36**

(84) Benannte Vertragsstaaten :
**AT BE CH DE FR GB LI SE**

(56) Entgegenhaltungen :
**EP-A- 0 202 996**
**EP-A- 0 320 258**
**DE-A- 3 829 501**
**FR-A- 2 626 182**

(73) Patentinhaber : **TESIMAX-ALTINGER GMBH**
**Hölderlinstrasse 39**
**D-75181 Pforzheim (DE)**

(72) Erfinder : **Altinger, Winfried**
**Hölderlinstrase 39**
**W-7530 Pforzheim (DE)**

(74) Vertreter : **Frank, Gerhard, Dipl.-Phys.**
**Patentanwälte Mayer, Frank, Reinhardt,**
**Westliche 24**
**D-75172 Pforzheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Schutzbekleidungsstück, insbesondere einen hitzebeständigen Chemikalien-Schutzanzug, bestehend aus einem mehrschichten Material.

Chemikalien-Schutzanzüge werden allgemein verwendet, um beispielsweise bei Wartungs- oder Reparaturarbeiten in der chemischen Industrie( durch angestelltes Personal) aber auch bei Unglücksfällen (insbesondere durch die Feuerwehr) die Durchführung von Arbeitsgängen bei der jeweiligen Aufgabe zu ermöglichen, und gleichzeitig dem damit beauftragten Menschen einen möglichst weitgehenden Schutz gegenüber den hierbei entstehenden Umweltbeeinträchtigungen zu geben. Es handelt sich hierbei insbesondere um die Einwirkung von flüssigen oder gasförmigen Chemikalien, gegen die solche Chemikalien-Schutzanzüge weitgehend resistent sein sollen; so dient beispielsweise eine Schicht aus Butylkautschuk zum gasdichten Abschluß der Schutzkleidung ( DE-A -3829 5o1).

Obwohl derartige Chemikalien-Schutzanzüge aufgrund ihres Aufbaus grundsätzlich zu unterscheiden sind von Hitze-Schutzanzügen beispielsweise zur Feuerbekämpfung, ergibt sich aus den oben beschriebenen Einsatzbereichen jedoch auch ohne weiteres eine nicht zu vernachlässigende Gefährdung des Trägers des Chemikalien-Schutzanzuges durch unerwartete oder unvorhersehbare Entwicklungen, insbesondere chemische Reaktionen, die zu einer plötzlichen starken Hitzeentwicklung führen, beispielsweise Entzündungen oder Verpuffungen. Selbst wenn das betroffene Personal so schnell wie möglich den betreffenden Standort verlässt, bedeuten solche unvorhersehbaren Hitzeentwicklungen und/ oder Flammenentstehungen eine erhebliche Gefährdung für die beteiligten Menschen, da der vorbekannte Materialaufbau hierfür keinen Schutz bietet.

Andererseits erfordern die oben angeführten Arbeiten im Chemiebereich eine gewisse Beweglichkeit und Flexibilität des Personals, so das die Beschaffung eines Schutzanzuges beispielsweise durch "Addition" von chemialien-resistenten Materialien einerseits und Feuerschutzmaterialien andererseits wegen des hierbei entstehenden großen Gewichtes und damit der Beeinträchtigung der Handlungsfähigkeit der betreffenden Personen auscheiden muß.

Aus der DE-A- 38 29 5o1 ist ein Laminatmaterial für Schutzkleidung bekannt, das gegen beide Gefahren, also Einwirkung von Chemikalien einerseits und Hitze andererseits, schützen soll. Wie bei den meisten bekannten mehrschichtigen Chemikalien-Schutzbekleidungen sind auch hier Schichten aus thermoplastischem Material vorgesehen, insbesondere Polyester oder Polyethylen, die nicht hitzebeständig über längere Zeiten sind, sondern selbst brennbar bzw. schmelzbar. Ein derartiger Schutzanzug würde dann zerstört werden und auch der Chemikalienschutz würde verlorengehen. Die Schutzbekleidung mit einem Laminatmaterial nach der DE-A- 38 29 5o1 ist daher bestenfalls für kurzzeitige Hitze-oder Flammeinwirkung geeignet; die hierzu vorgesehene äußere Schicht aus reflektierender Metallfolie kann längere Hitzeeinwirkung von den hitzeempfindlichen, inneren Polyethylen-Schichten nicht fernhalten. Darüber hinaus ist der Fertigungsaufwand für dieses Laminatmaterial sehr hoch und hieraus gefertigte Schutzbekleidung kam nie auf den Markt.

Aufgabe der Erfindung gegenüber einer solchen vorbekannten Schutzbekleidung gemäss DE-A- 38 29 5o1 ist es daher vorrangig, ein Schutzbekleidungstück, insbesondere einen Chemikalien-Schutzanzug dieser mehrschichtigen Bauart so weiterzubilden, daß die Schutzwirkung gegenüber Chemikalien einerseits zumindest bestehen bleibt, aber zusätzlich eine verbesserte Schutzwirkung gegenüber der Einwirkung von Hitze oder Feuer erreicht wird.

Erfindungsgemäss wird diese Aufgabe durch den im Anspruch 1 angegebenen Schichtaufbau gelöst. Aramidgewebe der hier verwendeten Art ist unter der Bezeichnung "KEVLAR" (Warenzeichen der Dupont) oder "TWARON"( Warenzeichen der ENKA...) im Handel erhältlich.

Derartige Gewebe sind bereits bekannt für den Einsatz als äußere Schicht für spezielle Feuerschutzbekleidung (US-A-4,849,28o; DE-A-34 37 383; DE-A- 3737 299).

Besonders vorteilhaft ist es, wenn das Aramidgewebe als doppellagiges, flexibles Gewebe mit einem Flächengewicht von etwa llo Gramm/Quadratmeter ausgebildet ist; dieses sehr geringe Flächengewicht der dritten Schicht eröffnet die Möglichkeit, die anderen drei Schichten, deren Zweck die Schaffung einer ausreichenden Chemikalien-Resistenz ist, stärker auszubilden und somit auch die Schutzwirkung im Chemiebereich zu erhöhen.

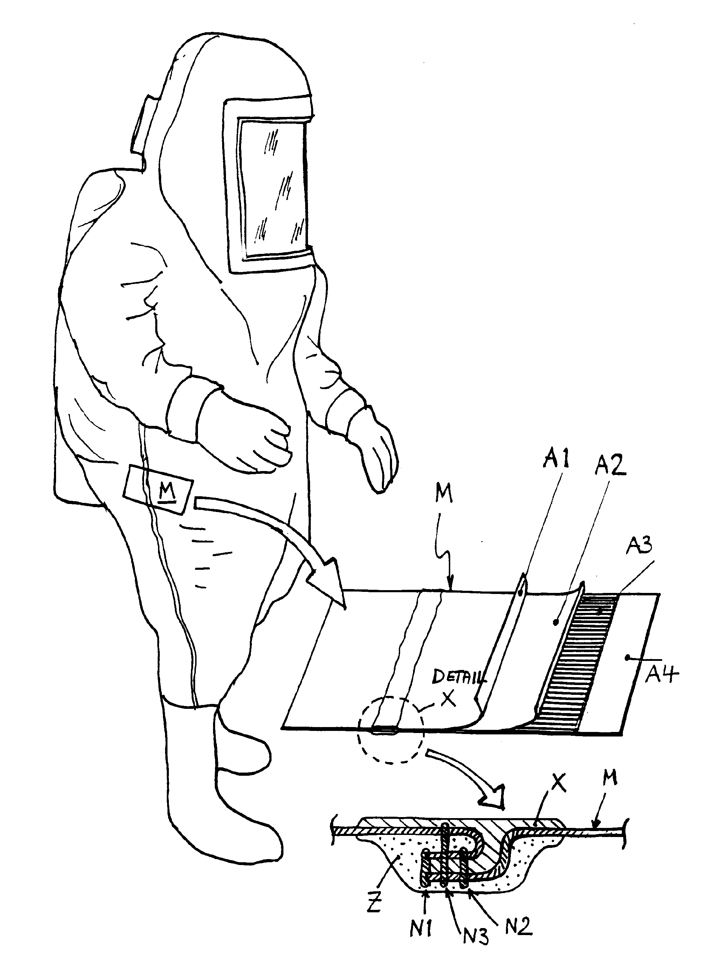

In der Figur ist ein Schutzanzug mit dem erfindungsgemässen Schichtaufbau schematisch dargestellt, dieses mehrlagige Material M lässt sich insbesondere zur Herstellung von Chemikalien-Schutzanzügen verwenden, natürlich aber auch für andere Schutzbekleidungsstücke, wie z.B. Handschuhe, Gesichtsmasken, Mäntel, Hosen usw.

Die einzelnen Schichten A1... A4 sind gemäss einer bevorzugten Ausführungsform wie folgt ausgebildet und haben folgende Aufgaben zu erfüllen:

Die äußerste Schicht A1 besteht aus einem Fluor-Kautschuk, wie er unter dem Warenzeichen "VITON" der Fa. Dupont im Handel erhältlich ist, mit einem Flächengewicht von etwa l5o Gramm/Quadratmeter. Diese Schicht dient als erste Chemikalien-Schutzschicht, d.h., als äußere Barriere gegen Chemikalien verschiedenster Art,insbesondere gegen solche, gegen die die nachfolgende innere Schicht A2 empfindlich ist, wie zum Beispiel Toluol .

Die von außen gesehen zweite Schicht A2 besteht aus einem Butylkautschuk mit einem Flächengewicht von ebenfalls etwa l5o Gramm/Quadratmeter;Butylkautschuke sind Co- Polymere aus Isobuthylen mit geringen Mengen Isopren; von besonderer Bedeutung hierbei ist, daß sie vulkanisierbar sind.Butylkautschuke besitzen eine hervorragende Resistenz gegen Wasser und eine große Anzahl von Chemikalien sowie eine extrem niedrige Gasdurchlässigkeit; sie wirken beim erfindungsgemässen Aufbau als zweite Chemikalien-Schutzschicht d.h., zum Auffangen aller derjenigen Chemikalien oder Aufhalten aller derjenigen Gase, die die erste Schutzschicht A1 durchdringen konnten.

Die dritte Schicht A3 ist ein doppellagiges Gewebe aus Aramidfaser mit einem Flächengewicht von etwa llo Gramm/Quadratmeter, das unter dem Warenzeichen "Twaron" von der Firma ENKA AG/Wuppertal erhältlich ist.

Aramide sind Fasern aus langkettigen aromatischen Polyamiden, die eine sehr hohe mechanische Stabilität und eine hohe Temperaturbeständigkeit besitzen, insbesondere im Gegensatz zu den bisher in Chemikalien-Schutzanzügen angesetzten Thermoplasten nicht schmelzend sind.

Als vierte und innerste Schicht A4 dient wiederum eine weitere Chemikalien-Schutzschicht aus Butylkautschuk mit einem Flächengewicht von 200 g/m$^2$.

Dieser Schichtaufbau bietet sowohl auch optimalen Schutz gegen die Einwirkung von Chemikalien und Gasen, jedoch auch einen relativ lang andauernden Schutz gegen Hitze und Flammen, insbesondere bei unkontrollieren Prozessen im Umgang mit hochentzündlichen Chemikalien, Gasen und Stauben.

Ein besonderer Vorteil des erfindungsgemässen Schichtaufbaues besteht darin,daß auch bei sehr niedrigen Temperaturen der Schutzanzug weich bleibt und nicht brüchig wird.

Die zweite und vierte Schicht aus Butyl-Kautschuk dient hierbei auch gleichzeitig als beidseitiger Schutz des eingeschlossenen Aramid-Fasergewebes (dritte Schicht), diese Schichten können durch Vulkanisieren miteinander verbunden werden,so daß die bisher bei dem vorbekannten Schutzbekleidungsstücken erforderlichen thermoplastischen Zwischenschichten,die auch zur Herstellung einer festen Verbindung zwischen den einzelnen Lagen dienen sollten,entfallen können.

Eine Besonderheit des aus diesem Material aufgebauten Schutzanzuges besteht im Aufbau der Nähte, wie dies als "Detail X" in der Zeichnung dargestellt ist:

An den Nahtstellen sind die aneinandergrenzenden Randbereiche des mehrschichtigen Materials M in der in der Figur dargestellten Weise gefaltet (die Darstellung ist nicht maßstäblich und dient nur zur Veranschaulichung);hierbei sind die oberen, nach außen zeigenden aneinanderstoßenden Randbereiche des Materials M mit einer versiegelnden Schicht X aus Fluor-Kautschuk abgedeckt,entsprechend der äußeren Schicht A1 des Materials M selbst( Material "VITON", siehe oben), so daß sämtliche Stoßflächen des Materials M im Überlappungs- und Randbereich über eine Zwischen- und Abdeckschicht aus dem gleichen Material verbunden sind, also ein homogener Aufbau erzielt wird.

Dementsprechend zur Erzielung eines homogenen Aufbaues ist auch die Innenfläche des Materials M, also die zum Körper zeigende Innenschicht A4 von einer Siegelschicht Z aus Butyl-Kautschuk überdeckt.

Die erforderliche mechanische Stabilität wird durch Nähte N erreicht, die wie dargestellt, angebracht sind; von Bedeutung hierbei ist, daß auch für das Nahtmaterial Aramid-Fasern aus "Twaron" verwendet werden, so daß infolge der Hitzebeständigkeit dieses Materials auch bei größerer thermischer Beanspruchung des Chemikalien- Schutzanzuges ein Aufreißen oder Aufbrechen der Naht ausgeschlossen werden kann.

Die Nahtverbindung ist wie folgt aufgebaut: sie besteht aus insgesamt 3 Nähten N1,N2,N3; zuerst wird eine Überwendling-Naht N1 mit gleichzeitiger Kantenbeschneidung auf einer Spezialmaschine hergestellt, dann wird etwas zurückgesetzt eine zweite Naht N2 (Steppnaht) gesetzt und schließlich wird das (in der Zeichnung linke) Ende umgeschlagen und mittels der dritten Naht N3 (Kappnaht) nochmals durchgehend vernäht. Danach werden die Beschichtungen X und Z als Versiegelung aufgebracht.

Schutzanzüge mit dem erfindungsgemässen Schichtaufbau sind mehrfach getestet worden und mit dem oben erläuterten Ausführungsbeispiel sind folgende Werte erzielt worden:

| 10 Referenz-Prüfchemikalien gemäß VfDB-Richtlinien 0801: | | | |
|---|---|---|---|
| 1,2-Dichlorethan | 20 ml/m$^3$ | Fl | 30 min |
| Ammoniak | 50 ml/m$^3$ | G | 60 min |
| Toluol | 200 ml/m$^3$ | Fl | 60 min |
| Triethylamin | 10 ml/m$^3$ | Fl | 60 min |
| Chlor | 1 ml/m$^3$ | G | 60 min |
| Methanol | 200 ml/m$^3$ | Fl | 60 min |
| Salpetersäure 65%ig | | Fl | 60 min |
| Chlorwasserstoff | 5 ml/m$^3$ | G | 60 min |
| n-Octan | 500 ml/m$^3$ | Fl | 60 min |
| Schwefelsäure 96%ig | | Fl | 60 min |

Weitere Chemikalien bzw. Substanzen gemäß VfDB-Richtlinien geprüft:

| Acetaldehyd | 90 min |
|---|---|
| Acrylnitril | 60 min |
| Ameisensäure | 90 min |
| Anilin | 60 min |
| Blausäure | 60 min |
| Chlorbenzol | 60 min |
| 3,4-Dichlorbuten | 60 min |
| Dichlormethan | 60 min |
| Dimethylformamid | 60 min |
| Epichlorhydrin | 60 min |
| Essigsäure 96%ig | 60 min |
| Ethylacetat | 60 min |
| Kresol | 60 min |
| Methylacetat | 60 min |
| Methylenchlorid | 60 min |
| Phenol | 60 min |

Fl = flüssig    G = gasförmig

**Patentansprüche**

1.  Schutzbekleidungsstück,insbesondere hitzebeständiger Chemikalien-Schutzanzug, bestehend aus einem mehrschichtigen Material, mit folgender Schichtfolge von außen nach innen:
    - eine erste Schicht aus einem Fluor-Elastomer,insbesondere einem Fluor-Kautschuk ,(A1),
    - eine zweite Schicht aus Butylkautschuk (A2),
    - eine dritte Schicht aus einem Gewebe aus Aramidfasern (A3),
    - eine vierte Schicht aus Butylkautschuk (A4).

2.  Schutzbekleidungsstück nach Anspruch 1,dadurch gekennzeichnet, daß die dritte Schicht (A3) doppellagiges ,flexibles Aramid-Gewebe mit einem Flächengewicht von etwa llo g/m$^2$ ist.

3. Schutzbekleidungsstück nach Anspruch 1 und 2, gekennzeichnet durch folgende Flächengewichte:
   - erste Schicht (A1) l5o g/m$^2$
   - zweite Schicht(A2) l5o g/m$^2$
   - vierte Schicht (A4) 2oo g/m$^2$

4. Schutzbekleidungsstück nach Anspruch 1, dadurch gekennzeichnet daß die Schichten (A2,A4) aus Butylkautschuk auf die eingeschlossene,dritte Schicht (A3) aus Aramidfasern aufvulkanisiert sind.

5. Schutzbekleidungsstück nach Anspruch 1, dadurch gekennzeichnet, daß das Nahtmaterial aus Aramidfasern besteht.

6. Schutzbekleidungsstück nach Anspruch 1, dadurch gekennzeichnet, daß die Nahtbereiche auf der Außenseite mit Fluor-Kautschuk (X), auf der Innenseite mit Butyl-Kautschuk (Z) überzogen und versiegelt sind.

## Claims

1. Article of protective clothing, more especially a heat-resistant suit for protection against chemicals, comprising a multi-layered material, having the following sequence of layers from the outside to the inside:
   - a first layer formed from a fluorine-containing elastomeric material, more especially a fluorine-containing rubber, (A1),
   - a second layer formed from butyl rubber (A2),
   - a third layer formed from a web of aramide fibres (A3),
   - a fourth layer formed from butyl rubber (A4).

2. Article of protective clothing according to claim 1, characterised in that the third layer (A3) is a double-layered, flexible aramide web having a weight per unit area of approximately 110 g/m$^2$.

3. Article of protective clothing according to claims 1 and 2, characterised by the following weights per unit area:
   - first layer (A1) 150 g/m$^2$
   - second layer (A2) 150 g/m$^2$
   - fourth layer (A4) 200 g/m$^2$.

4. Article of protective clothing according to claim 1, characterised in that the layers (A2. A4) formed from butyl rubber are vulcanised onto the enclosed third layer (A3) formed from aramide fibres.

5. Article of protective clothing according to claim 1, characterised in that the seam material is formed from aramide fibres.

6. Article of protective clothing according to claim 1, characterised in that the seam regions are coated on the outside with fluorine-containing rubber (X) and on the inside with butyl rubber (Z) and are sealed.

## Revendications

1. Vêtement protecteur, en particulier vêtement résistant à la chaleur pour la protection contre des produits chimiques, constitué d'un matériau multicouche, les couches se succédant de la manière suivante de l'extérieur vers l'intérieur .
   - une première couche d'un élastomère fluoré, en particulier d'un caoutchouc fluoré, (A1),
   - une deuxième couche de butylcaoutchouc (A2),
   - une troisième couche d'un tissu de fibres d'aramide (A3),
   - une quatrième couche de butylcaoutchouc (A4).

2. Vêtement protecteur selon la revendication 1, caractérisé en ce que la troisième couche (A3) est un tissu flexible en fibres d'aramide à deux couches avec un grammage d'environ 110 g/m$^2$.

3. Vêtement protecteur selon l'une des revendications 1 et 2, caractérisé en ce qu'il présente les grammages suivants :
- première couche (A1) 150 g/m$^2$
- deuxième couche (A2) 150 g/m$^2$
- quatrième couche (A4) 200 g/m$^2$.

4. Vêtement protecteur selon la revendication 1, caractérisé en ce que les couches (A2, A4) constituées de butylcaoutchouc sont vulcanisées sur la troisième couche (A3) emprisonnée, en fibres d'aramide.

5. Vêtement protecteur selon la revendication 1, caractérisé en ce que le matériau de couture est constitué de fibres d'aramide.

6. Vêtement protecteur selon la revendication 1, caractérisé en ce que les zones de couture sont enduites et scellées avec du caoutchouc fluoré (X) sur la face extérieure et avec du butylcaoutchouc (Z) sur la face intérieure.